# EUROPEAN PATENT APPLICATION

(11) **EP 4 641 055 A1**
(43) Date of publication of application: **29.10.2025**
(21) Application number: 23906750.7
(22) Date of filing: 07.12.2023
(51) Int. Cl.: F16K 5/04, F16K 11/076, F16K 11/085

(54) **ROTARY VALVE**

(30) Priority: 20.12.2022 JP 2022203579
(71) Applicant: AISIN CORPORATION, Kariya-shi, Aichi 448-8650 (JP)
(72) Inventor: KIHARA Masao, Kariya-shi, Aichi 448-8650 (JP); OIWA Toshiyuki, Kariya-shi, Aichi 448-8650 (JP); YAMAGUCHI Tomohiro, Kariya-shi, Aichi 448-8650 (JP)
(74) Representative: Winter, Brandl - Partnerschaft mbB
(86) International application number: PCT/JP2023/043833
(87) International publication number: WO 2024/135384

(57) **Abstract**

A rotary valve includes a shaft part that rotates about an axis by drive force, and a valve part rotatable integrally with the shaft part and having a cylindrical shape, in which the valve part includes a top plate part extending from the shaft part in a direction orthogonal to the axis, and a main body part extending from the top plate part along the shaft part, the main body part includes a cutout portion cut out in a fan shape centered on the axis, on a side opposite to the top plate part, and the cutout portion forms a communication path that allows an inlet through which fluid flows in and an outlet through which the fluid flows out to communicate with each other.

## Description

### TECHNICAL FIELD

The present disclosure relates to a rotary valve.

### BACKGROUND ART

As a rotary valve for switching fluid channels, Patent Literature 1 discloses a rotary valve including a housing in which inlets and an outlet are formed, a valve main body part housed in the housing, and a valve body rotatably supported by the housing. The valve body includes a valve main body part having a columnar shape, and a plurality of channels through which the fluid flows are formed in the valve main body part.

### CITATIONS LIST

### PATENT LITERATURE

Patent Literature 1: JP 2021-143743 A

### SUMMARY OF INVENTION

### TECHNICAL PROBLEMS

In a configuration for controlling a plurality of fluid channels, it is necessary to form a plurality of channels in a valve main body part as in the rotary valve disclosed in Patent Literature 1. Therefore, a configuration of the valve main body part is complicated, and, for example, a technique for manufacturing the rotary valve with high accuracy with respect to positions of the inlets and outlet formed in the housing is required. Therefore, a rotary valve having a simplified configuration is desired.

The present disclosure has been made in view of the above problems, and intends to provide a rotary valve having a simplified configuration.

### SOLUTIONS TO PROBLEMS

A feature of a rotary valve according to the present disclosure is that the rotary valve includes a shaft part that rotates about an axis by drive force, and a valve part rotatable integrally with the shaft part and having a cylindrical shape, in which the valve part includes a top plate part extending from the shaft part in a direction orthogonal to the axis, and a main body part extending from the top plate part along the shaft part, the main body part includes a cutout portion cut out in a fan shape centered on the axis, on a side opposite to the top plate part, and the cutout portion forms a communication path that allows an inlet through which fluid flows in and an outlet through which the fluid flows out to communicate with each other.

According to this configuration, the communication path through which the fluid flows can be formed in the main body part only by cutting out the main body part in a fan shape centered on the axis, and thus a configuration of the rotary valve can be simplified. Because the cutout portion is cut out in a fan shape centered on the axis, it is easy to create the cutout portion. Furthermore, when the valve part rotates, a channel cross-sectional area through which the fluid can flow increases. Moreover, it is not necessary to separately form, inside the main body part, a plurality of channels connecting the outlet and the inlet. Thus, the rotary valve has a simplified configuration.

### BRIEF DESCRIPTION OF DRAWINGS

FIG. 1 is a longitudinal cross-sectional view showing a configuration of a rotary valve according to an embodiment.
FIG. 2 is a diagram showing a first position of a valve rotor according to the embodiment.
FIG. 3 is a perspective view showing the valve rotor according to the embodiment.
FIG. 4 is a perspective view showing the valve rotor as viewed from an angle different from an angle in FIG. 3.
FIG. 5 is a diagram of the valve rotor according to the embodiment as viewed from a valve channel part side.
FIG. 6 is a diagram of the valve rotor according to the embodiment as viewed from a side opposite to a top plate part.
FIG. 7 is a diagram showing a second position of the valve rotor according to the embodiment.
FIG. 8 is a diagram showing a third position of the valve rotor according to the embodiment.
FIG. 9 is a diagram showing a fourth position of the valve rotor according to the embodiment.
FIG. 10 is a perspective view showing the valve rotor according to another embodiment.

### DESCRIPTION OF EMBODIMENTS

Hereinafter, a rotary valve according to an embodiment of the present disclosure will be described with reference to the drawings. The rotary valve, however, is not limited to the following embodiments, and various modifications may be made without departing from the gist of the modifications.

### [Basic configuration]

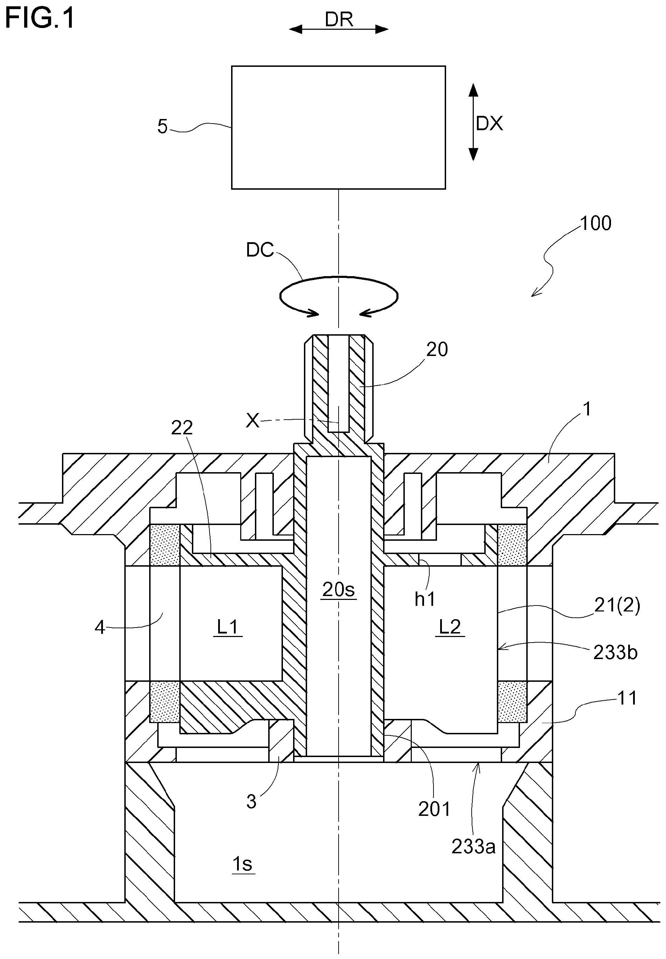

FIG. 1 shows a cross section (longitudinal cross section) along an axis X of a rotary valve 100. In the present embodiment, the rotary valve 100 is a five-way valve, and is used for controlling fluid flowing to a battery or inverter motor mounted on a vehicle such as an automobile, for example. The fluid is cooling water such as a coolant.

As shown in FIG. 1, the rotary valve 100 includes a housing 1, a valve rotor 2 housed in the housing 1, a bearing 3 rotatably supporting the valve rotor 2, a sealing material 4 disposed between the housing 1 and the valve rotor 2 over a substantially entire circumference of the valve rotor 2, and an actuator 5 connected to the valve rotor 2. The actuator 5 includes an electric motor or the like, and transmits rotational force (an example of drive force) to the valve rotor 2. The valve rotor 2 rotates about an axis X by the rotational force from the actuator 5. Flow of the fluid is controlled by the rotation of the valve rotor 2. Hereinafter, a direction along the axis X is referred to as an "axis direction DX", a direction orthogonal to the axis direction DX is referred to as a "radial direction DR", and a circumferential direction of the valve rotor 2 is referred to as a "circumferential direction DC". Note that an orientation of the rotary valve 100 in use is not particularly limited. However, of the axis direction DX, a side on which the actuator 5 is provided may be referred to as an "upper side", and an opposite side thereof may be referred to as a "lower side".

### [Housing]

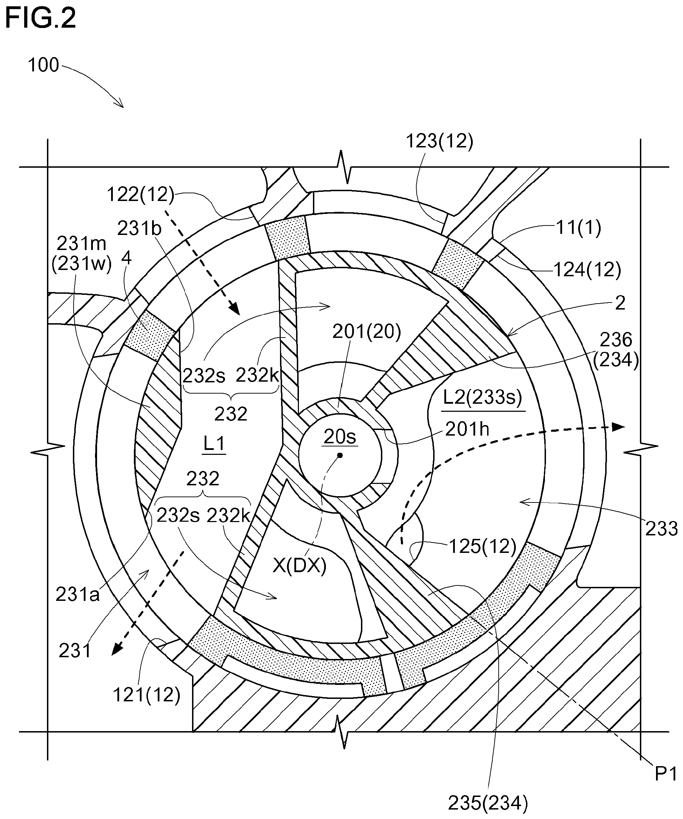

FIG. 2 is a transverse cross-sectional view showing the rotary valve 100. Note that FIG. 2 is a transverse cross-sectional view of the rotary valve 100 as viewed from the upper side. As shown in FIG. 2, the housing 1 has a housing wall portion 11 partitioning a space in which the valve rotor 2 is housed.

The housing wall portion 11 has a circular shape as viewed in a direction along the axis direction DX. In the housing wall portion 11, a plurality of ports 12 are formed along the circumferential direction DC. In the present embodiment, four ports 12 are formed in the housing wall portion 11 along the circumferential direction DC, and the four ports 12 penetrate the housing wall portion 11 along the radial direction DR. Hereinafter, the four ports 12 are referred to as a "first port 121", a "second port 122", a "third port 123", and a "fourth port 124".

Furthermore, a fifth port 125 is formed at a lower portion (bottom wall) of the housing wall portion 11. The fifth port 125 communicates with a channel chamber 1S formed in the housing 1. The first port 121, the second port 122, the third port 123, the fourth port 124, and the fifth port 125 are connected to different external channels. Note that the external channels are connected to, for example, the battery, the inverter motor, and the like.

### [Valve rotor]

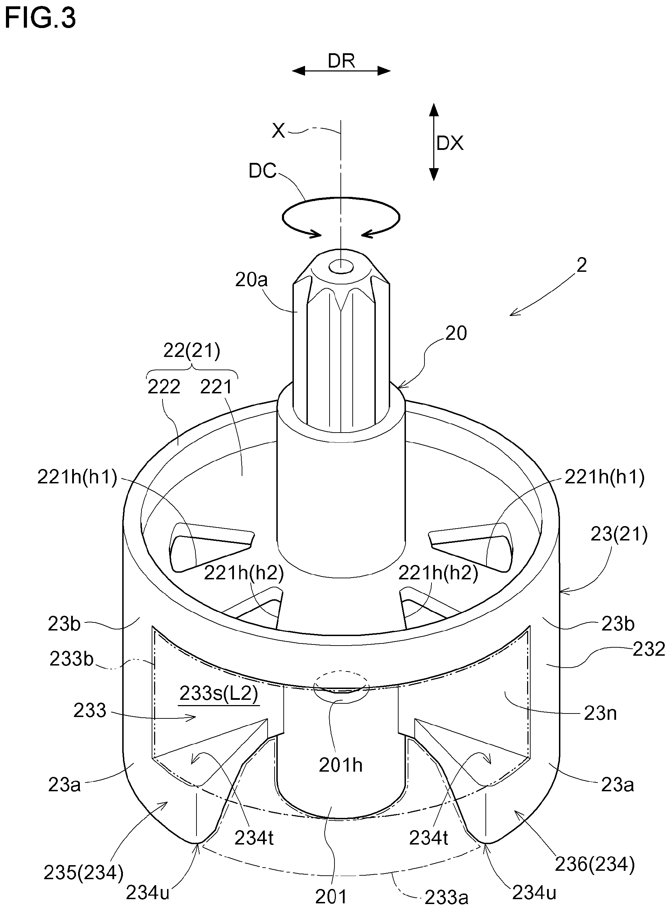

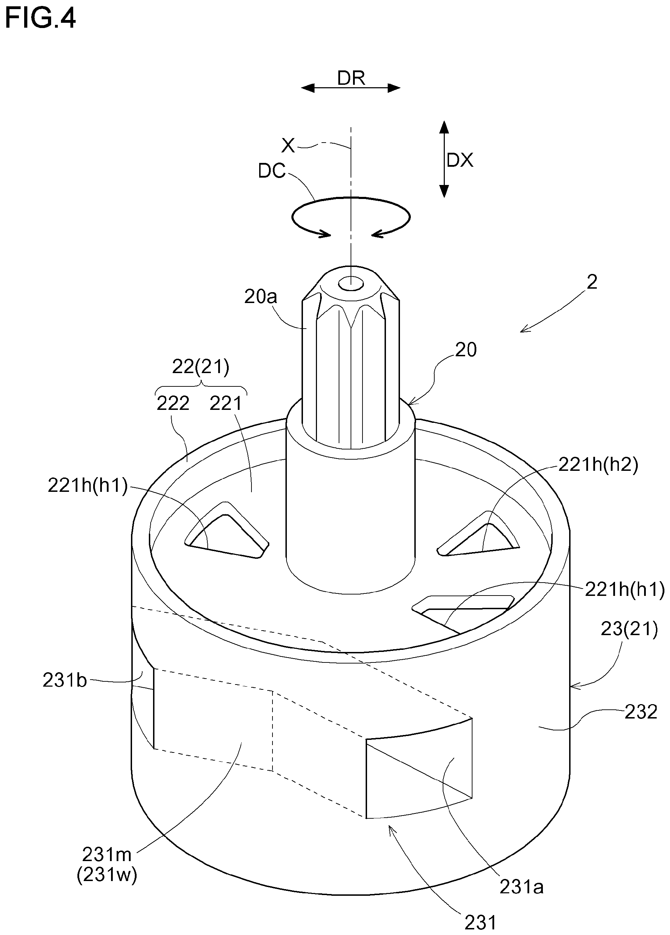

FIGS. 3 and 4 are perspective views showing the valve rotor 2. As shown in FIGS. 3 and 4, the valve rotor 2 has a cylindrical shape, extends along the axis direction DX, and includes a shaft part 20 coaxial with the axis X, and a valve part 21 having a cylindrical shape and rotatable integrally with the shaft part 20. A material of the valve rotor 2 is resin or the like, and the shaft part 20 and the valve part 21 are integrally formed.

The shaft part 20 has an end portion 20a (an example of an input end portion, hereinafter referred to as an "upper end portion 20a") on a side to which the rotational force is input (an actuator 5 side (upper side) described with reference to FIG. 1). The upper end portion 20a is formed in a spline shape, and the upper end portion 20a is formed with protrusions (or grooves) to be fitted with grooves (or protrusions) provided on a boss portion (not shown) of the actuator 5 described with reference to FIG. 1. With such a configuration of the upper end portion 20a, coupling between the valve rotor 2 and the actuator 5 is more reliable, and the rotational force from the actuator 5 is reliably transmitted to the valve rotor 2.

As shown in FIG. 1, the shaft part 20 is hollow, and both ends in the axis direction DX are opened. The shaft part 20 has a shaft wall 201 serving as a partition between an internal space 20s of the shaft part 20 and an external space of the shaft part 20.

As shown in FIG. 2, a shaft hole 201h penetrating the shaft wall 201 in the radial direction DR is formed in the shaft wall 201. That is, the shaft hole 201h allows the internal space 20s of the shaft part 20 and the external space of the shaft part 20 to communicate with each other. The shaft hole 201h functions as an air vent hole for gas such as air contained in the fluid.

As shown in FIGS. 3 and 4, the valve part 21 includes a top plate part 22 extending from the shaft part 20 in the radial direction DR, and a main body part 23 extending along the axis direction DX from the top plate part 22 in a direction away from the top plate part 22 (upper end portion 20a).

The top plate part 22 has a circular plate shape as viewed in the direction along the axis direction DX. The top plate part 22 includes a top plate main body 221 having a disk shape and extending along the radial direction DR, and an outer edge part 222 rising toward an upper end portion 20a side (upper side) with an outer peripheral portion of the top plate main body 221 as a base end. The outer edge part 222 is continuously provided over an entire circumference of an outer peripheral portion of the top plate main body 221.

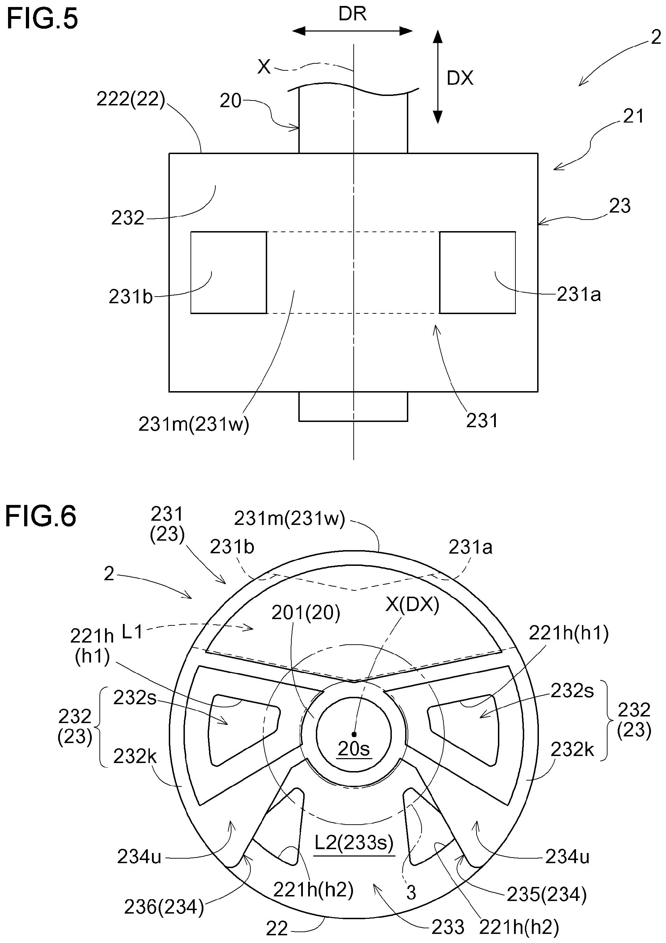

As shown in FIGS. 3, 4, and 6, four top plate holes 221h penetrating the top plate main body 221 along the axis direction DX are formed in the top plate main body 221. The four top plate holes 221h function as air vent holes for gas such as air contained in the fluid. Note that FIG. 6 is a diagram of the valve rotor 2 as viewed from the lower side.

As shown in FIG. 6, the four top plate holes 221h include two first top plate holes h1 provided so as to face each other via the shaft part 20, and two second top plate holes h2 provided apart from each other between the two first top plate holes h1.

The main body part 23 includes the valve channel part 231 in which a channel through which the fluid flows is formed, and a valve base body part 232 that separates flow of the fluid.

The valve channel part 231 includes a wall portion 231w having a fan shape and centered on the axis X as viewed in the direction along the axis direction DX. In the wall portion 231w, a first valve channel L1 (an example of a through channel) penetrating an inside of the wall portion 231w (main body part 23) is formed. The fluid flows through the first valve channel L1 in the valve rotor 2 in a predetermined posture. The first valve channel L1 is formed in a substantially V-shape bent in vicinity of the axis X as viewed in the direction along the axis direction DX. A size of channel cross sections of inlet and outlet ports for fluid to the first valve channel L1 corresponds to the ports 12 described with reference to FIG. 2. Hereinafter, each of two inlet and outlet ports of the first valve channel L1 is referred to as a "first inlet and outlet port 231a" and a "second inlet and outlet port 231b".

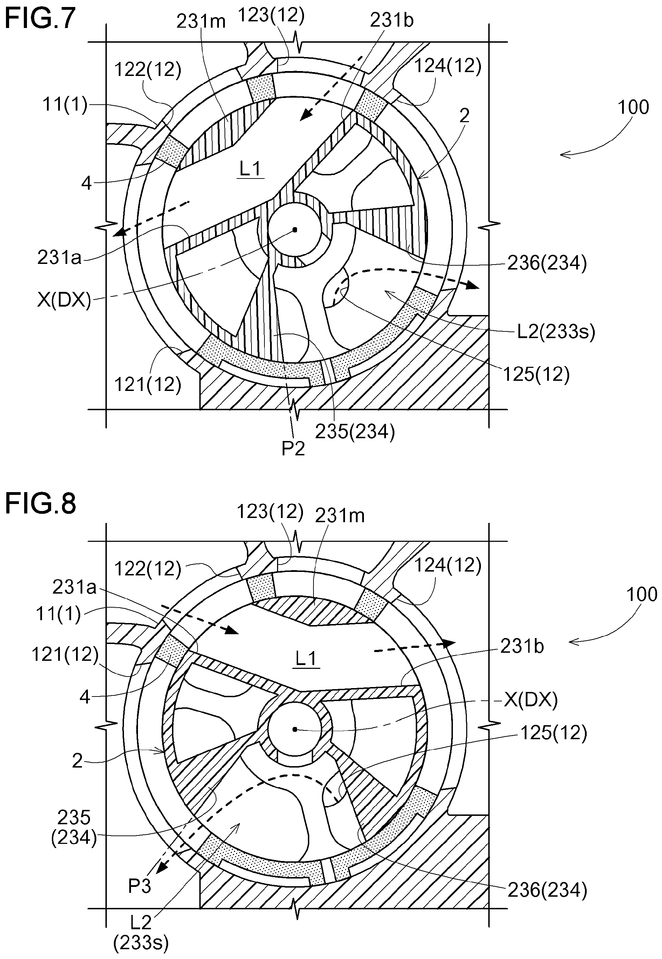

As shown in FIG. 5, the first inlet and outlet port 231a and the second inlet and outlet port 231b are formed to be separated from each other, and the wall portion 231w (hereinafter, referred to as an "intermediate portion 231m") is interposed between the first inlet and outlet port 231a and the second inlet and outlet port 231b. As shown in FIGS. 7 to 8, the intermediate portion 231m is formed to close the second port 122 or the third port 123 in the valve rotor 2 in a predetermined posture. Specifically, an area of the intermediate portion 231m is larger than channel cross-sectional areas of the second port 122 and the third port 123.

As shown in FIG. 6, the valve base body part 232 includes two base wall portions 232k and two valve spaces 232s partitioned by the two base wall portions 232k. The valve spaces 232s are opened on a side opposite to the top plate part 22 (lower side) (refer to FIG. 3 also). Furthermore, the valve spaces 232s communicate with the two first top plate holes h1 formed in the top plate part 22. The two first top plate holes h1 function as air vent holes.

As shown in FIGS. 3 and 6, the main body part 23 further includes a cutout portion 233 cut out in a fan shape (three-dimensionally, in a truncated cone shape) centered on the axis X. The cutout portion 233 is provided on a side opposite to the upper end portion 20a of the shaft part 20 with respect to the top plate part 22. That is, the cutout portion 233 is provided on a side opposite to the top plate part 22 in the axis direction DX.

The cutout portion 233 is opened on the side opposite to the top plate part 22 (lower side) and a side facing the valve base body part 232 (outer side in the radial direction DR). Hereinafter, a surface on a cutout portion 233 side of the main body part 23 is referred to as an "inner surface 23n".

A space formed by the cutout portion 233 communicates with the two second top plate holes h2 formed in the top plate part 22 described with reference to FIGS. 3, 4, and 6. The two second top plate holes h2 function as air vent holes.

In the present embodiment, the cutout portion 233 faces (communicates with) the first port 121 or fourth port 124 described with reference to FIG. 2 and faces (communicates with) the fifth port 125 (channel chamber 1S) in the valve rotor 2 in a predetermined posture. As shown in FIG. 3, the cutout portion 233 allows a portion facing the fifth port 125 and through which the fluid flows in (or out) (hereinafter, referred to as a "third inlet and outlet port 233a") and a portion facing the first port 121 or the fourth port 124 and through which the fluid flows out (or in) (hereinafter, referred to as a "fourth inlet and outlet port 233b") to communicate with each other. That is, the cutout portion 233 allows the third inlet and outlet port 233a through which the fluid flows in and out and the fourth inlet and outlet port 233b through which the fluid flows in and out to communicate with each other, and constitutes a communication path 233s (hereinafter, referred to as a "second valve channel L2") through which the fluid flows.

Furthermore, as shown in FIG. 3, the main body part 23 further includes projections 234 at an end portion 23a of the main body part 23, the end portion 23a being on the side opposite to the top plate part 22 in the direction along the axis direction DX (hereinafter, referred to as a "lower end portion 23a").

The projections 234 include two projecting walls 235 and 236 projecting from the inner surface 23n of the main body part 23 in the circumferential direction DC. Hereinafter, one of the two projecting walls 235 is referred to as a "first projecting wall 235", and another one is referred to as a "second projecting wall 236".

The first projecting wall 235 and the second projecting wall 236 face each other in the circumferential direction DC, and each of the first projecting wall 235 and the second projecting wall 236 extends from the lower end portion 23a of the main body part 23 toward the shaft part 20 (inner side in the radial direction DR). Each of the first projecting wall 235 and the second projecting wall 236 has a substantially triangular shape as viewed in the direction along the axis direction DX, and is formed so as to overlap a portion of the second valve channel L2 (communication path 233s) formed by the cutout portion 233. The projections 234 are formed so as to project from the main body part 23 toward outside in the radial direction DR, and such that a length thereof in the circumferential direction DC is longer toward the outside in the radial direction DR.

Each of the first projecting wall 235 and the second projecting wall 236 includes a first surface 234t (upper surface) facing the top plate main body 221 and a second surface 234u (lower surface) on a side opposite to the first surface 234t and farther from the upper end portion 20a than the first surface 234t is. The second surface 234u is tilted so as to be closer to the upper end portion 20a as being closer to the shaft part 20 (inward in the radial direction DR). The bearing 3 described with reference to FIG. 1 is provided on an inner portion of the second surface 234u in the radial direction DR, that is, an outer peripheral portion of the shaft part 20, and the valve rotor 2 is rotatably supported by the bearing 3.

### [Fluid control]

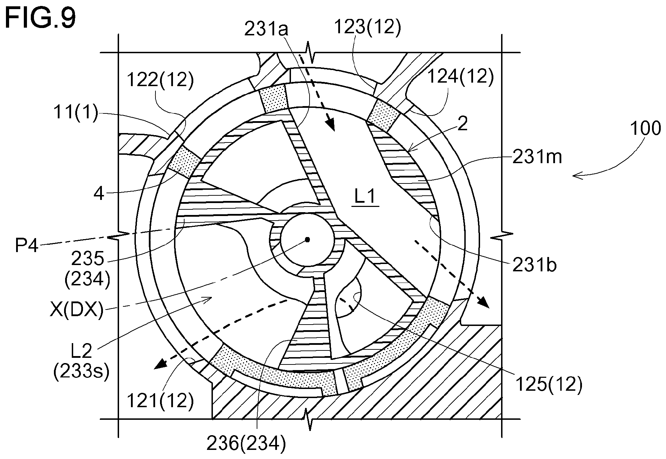

Next, fluid control by the rotary valve 100 will be described with reference to FIGS. 2 and 7 to 9. The rotary valve 100 according to the present embodiment simultaneously controls two channels. Note that FIG. 2 is a diagram showing the rotary valve 100 in which the valve rotor 2 is set to a first position P1, FIG. 7 is a diagram showing the rotary valve 100 in which the valve rotor 2 is set to a second position P2, FIG. 8 is a diagram showing the rotary valve 100 in which the valve rotor 2 is set to a third position P3, and FIG. 9 is a diagram showing the rotary valve 100 in which the valve rotor 2 is set to a fourth position P4.

First, the fluid channels in a case where the valve rotor 2 is set to the first position P1 (refer to FIG. 2) will be described.

As shown in FIG. 2, when the valve rotor 2 is set to the first position P1, the second inlet and outlet port 231b of the first valve channel L1 faces the second port 122, and the first inlet and outlet port 23 1a faces a portion of the first port 121. Furthermore, at the same time, an open portion (third inlet and outlet port 233a (refer to FIG. 3)) of the second valve channel L2 formed by the cutout portion 233 faces the fourth port 124. That is, the fluid supplied to the second port 122 passes through the first valve channel L1 and flows to the first port 121, and the fluid supplied to the fifth port 125 passes through the second valve channel L2 and flows to the fourth port 124.

Next, a case where the valve rotor 2 rotates clockwise by a predetermined angle about the axis X from the first position P1 shown in FIG. 2 and is set to the second position P2 (refer to FIG. 7) will be described.

As shown in FIG. 7, when the valve rotor 2 is set to the second position P2, the first inlet and outlet port 23 1a of the first valve channel L1 faces a portion of the first port 121, the second inlet and outlet port 231b faces the third port 123, and the second port 122 faces the intermediate portion 231m. Furthermore, at the same time, a portion of the open portion of the second valve channel L2 (third inlet and outlet port 233a (refer to FIG. 3)) faces a portion of the fourth port 124. That is, the fluid supplied to the third port 123 passes through the first valve channel L1 and is supplied to the first port 121. Furthermore, at the same time, the fluid supplied to the fifth port 125 passes through the second valve channel L2 and flows to the fourth port 124.

At the second position P2, the first projecting wall 235 faces and is in contact with the sealing material 4 in the radial direction DR. Therefore, reaction force due to the contact between the first projecting wall 235 and the sealing material 4 acts on the intermediate portion 231m, and the intermediate portion 231m more firmly comes into contact with the second port 122 (the housing wall portion 11 that constitutes the second port 122) via the sealing material 4. In other words, by providing the projection 234 (first projecting wall 235), a contact area between the valve rotor 2 and the sealing material 4 can be increased, and the reaction force due to the contact can be applied to the intermediate portion 231m. As a result, the intermediate portion 231m and the second port 122 (the housing wall portion 11 that constitutes the second port 122) can be brought into close contact with each other via the sealing material 4, and the fluid is prevented from flowing into the second port 122.

Next, a case where the valve rotor 2 rotates clockwise by a predetermined angle about the axis X from the second position P2 shown in FIG. 7 and is set to the third position P3 (refer to FIG. 8) will be described.

As shown in FIG. 8, when the valve rotor 2 is set to the third position P3, the first inlet and outlet port 231a of the first valve channel L1 faces the second port 122, the second inlet and outlet port 231b faces a portion of the fourth port 124, and the third port 123 faces the intermediate portion 231m. Furthermore, at the same time, a portion of the open portion of the second valve channel L2 (third inlet and outlet port 233a (refer to FIG. 3)) faces a portion of the first port 121. That is, the fluid supplied to the second port 122 passes through the first valve channel L1 and flows to the fourth port 124. At the same time, the fluid supplied to the fifth port 125 passes through the second valve channel L2 and flows to the first port 121.

At the third position P3, the second projecting wall 236 faces and is in contact with the sealing material 4 in the radial direction DR. Therefore, reaction force due to the contact between the second projecting wall 236 and the sealing material 4 acts on the intermediate portion 231m, and the intermediate portion 231m more firmly comes into contact with the third port 123 (the housing wall portion 11 that constitutes the third port 123) via the sealing material 4. In other words, by providing the projections 234 (second projecting wall 236), a contact area between the valve rotor 2 and the sealing material 4 can be increased, and the reaction force due to the contact can be applied to the intermediate portion 231m. As a result, the intermediate portion 231m and the third port 123 (the housing wall portion 11 that constitutes the third port 123) can be brought into close contact with each other via the sealing material 4, and the fluid is prevented from flowing into the third port 123.

Next, a case where the valve rotor 2 further rotates clockwise by a predetermined angle about the axis X from the third position P3 shown in FIG. 8 and is set to the fourth position P4 (refer to FIG. 9) will be described.

As shown in FIG. 9, when the valve rotor 2 is set to the fourth position P4, the first inlet and outlet port 231a of the first valve channel L1 faces the third port 123, and the second inlet and outlet port 231b faces a portion of the fourth port 124. Furthermore, at the same time, a portion of the open portion of the second valve channel L2 (third inlet and outlet port 233a (refer to FIG. 3)) faces the first port 121. That is, the fluid supplied to the third port 123 passes through the first valve channel L1 and flows to the fourth port 124. At the same time, the fluid supplied to the fifth port 125 passes through the second valve channel L2 and flows to the first port 121.

### [Effects of embodiment]

As described above, according to the present embodiment, the communication path 233s through which the fluid flows can be formed in the main body part 23 only by cutting out the main body part 23 in a fan shape centered on the axis X, and thus a configuration of the rotary valve 100 can be simplified.

Furthermore, as described with reference to FIG. 7, when the valve rotor 2 is at the second position P2, the reaction force due to the contact between the first projecting wall 235 and the sealing material 4 acts on the intermediate portion 231m, and the intermediate portion 231m (acted portion) more reliably comes into contact with the second port 122 via the sealing material 4, and thus the fluid is prevented from flowing into the second port 122. Similarly, as described with reference to FIG. 8, also when the valve rotor 2 is at the third position P3, the reaction force due to the contact between the second projecting wall 236 and the sealing material 4 acts on the intermediate portion 231m (acted portion), and the intermediate portion 231m more reliably comes into contact with the third port 123 via the sealing material 4, and thus the fluid is prevented from flowing into the third port 123. That is, by providing the first projecting wall 235 and the second projecting wall 236, a contact area between the sealing material 4 and the valve rotor 2 can be increased, and thus a sealing property of the rotary valve 100 can be improved. Furthermore, by increasing the contact area, for example, the reaction force due to the contact between the sealing material and the projections 234 can be dispersed, and deviation of the reaction force from the sealing material 4 due to the provision of the cutout portion 233 can be mitigated. Moreover, the projections 234 are formed so as to project from the main body part 23 toward outside in the radial direction DR, and such that the length thereof in the circumferential direction DC is longer toward the outside in the radial direction DR. Therefore, it is possible to more reliably prevent the fluid from flowing into the second port 122 or the third port 123, without hindering the flow of the fluid.

Furthermore, the projections 234 are configured such that the second surface 234u of each of the first projecting wall 235 and the second projecting wall 236 is tilted so as to be closer to the upper end portion 20a as being closer to the shaft part 20. Thus, interference between the projections 234 and the bearing 3 can be avoided. As a result, height (upward projection) of the valve rotor 2 supported by the bearing 3 is suppressed, and an entire height of the rotary valve 100 (length in the direction along the axis direction DX) can be suppressed.

Furthermore, as shown in FIG. 6, because the top plate holes 221h are formed in the top plate part 22, gas such as air contained in the fluid flowing into the valve spaces 232s and the communication path 233s can be removed from the top plate holes 221h. Furthermore, air entrainment in the rotary valve can be prevented, and valve properties can be improved. Moreover, a weight of the rotary valve 100 can be reduced.

Furthermore, as shown in FIG. 2, because the shaft hole 201h that allows the internal space 20s and the external space of the shaft part 20 to communicate with each other is formed in the shaft part 20, gas contained in the fluid flowing into the internal space 20s of the shaft part 20 can be removed from the shaft hole 201h. Furthermore, air entrainment in the rotary valve can be prevented, and valve properties can be improved. Moreover, a weight of the rotary valve 100 can be reduced.

### [Other embodiments]

The present disclosure may be configured as follows in addition to the above-described embodiment (those having the same functions as those in the embodiment are denoted by the same numbers and reference signs as in the embodiment).

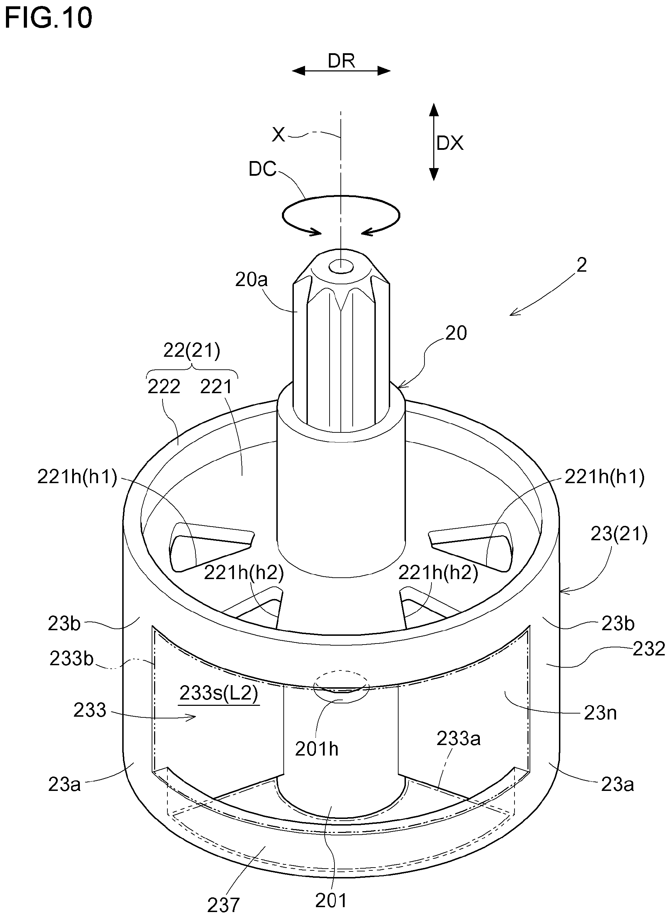

(1) In the present embodiment, a case has been described where the second surface 234u (lower surface) of each of the two projecting walls 235 is a tilted surface that is tilted so as to be closer to the upper end portion 20a as being closer to the shaft part 20. However, the second surface 234u (lower surface) of each of the two projecting walls 235 may be a flat surface instead of a tilted surface.
(2) In the present embodiment, a case has been described where the projections 234 are provided at the lower end portion 23a of the main body part 23. However, the projections 234 may be provided at a portion other than the lower end portion 23a of the main body part 23, as long as a sealing property of the rotary valve 100 is maintained and the flow of the fluid is not hindered. For example, the projections 234 may be provided between an upper end portion 23b (refer to FIG. 3) on a top plate part 22 side and the lower end portion 23a (for example, in vicinity of a midpoint therebetween).
(3) In the present embodiment, a case where the main body part 23 includes the projections 234 has been described as an example. However, the main body part 23 may not include the projections 234.
(4) Furthermore, as shown in FIG. 10, the rotary valve 100 may further include a coupling portion 237 that faces the top plate part 22 with the cutout portion 233 interposed therebetween, and provides coupling in the circumferential direction DC. Thus, the contact area between the sealing material 4 and the valve rotor 2 can be increased, and thus the sealing property of the rotary valve 100 can be improved. Furthermore, by increasing the contact area, for example, the reaction force due to the contact between the sealing material and the projections 234 can be dispersed, and deviation of the reaction force from the sealing material 4 due to the provision of the cutout portion 233 can be mitigated.
(5) In the present embodiment, the four top plate holes 221h are formed in the top plate main body 221. However, the number of the top plate holes 221h formed in the top plate main body 221 is not limited to four, and may be any one of one to three, or five or more. Alternatively, the top plate holes 221h may not be provided.
(6) In the present embodiment, the shaft hole 201h is formed in the shaft wall 201 of the shaft part 20. However, the shaft hole 201h may not be provided.
(7) In the present embodiment, the rotary valve 100 having five ways has been described as an example. However, the rotary valve 100 may be a three-way valve, a four-way valve, or the like. The number of the ports 12 formed in the housing 1 (housing wall portion 11) is not limited to five, and is appropriately changed according to the number of fluid directions controlled by the rotary valve 100.
(8) Furthermore, a port from which the fluid flows in and a port from which the fluid flow out are not limited to those in the case described in the present embodiment, and can be replaced with each other. That is, a direction in which the fluid flows may be reversed.
(9) Furthermore, in the embodiment described above, a case has been described where the actuator 5 is disposed on the upper side and the rotational force from the actuator 5 is input to the end portion 20a. However, a position of the actuator 5 is not limited to the upper side of the shaft part 20, and the actuator 5 may be disposed on the lower side, for example. In this case, the end portion 20a to which the rotational force from the actuator 5 is input is also disposed on the lower side of the shaft part 20.

In the embodiments described above, the following configurations are conceivable.

(1) A feature of a rotary valve 100 according to the present disclosure is that the rotary valve 100 includes a shaft part 20 that rotates about an axis X by drive force, and a valve part 21 rotatable integrally with the shaft part 20 and having a cylindrical shape, in which the valve part 21 includes a top plate part 22 extending from the shaft part 20 in a direction orthogonal to the axis X, and a main body part 23 extending from the top plate part 22 along the shaft part 20, the main body part 23 includes a cutout portion 233 cut out in a fan shape centered on the axis X, on a side opposite to the top plate part 22, and the cutout portion 233 forms a communication path 233s that allows a third inlet and outlet port 233a (inlet) through which fluid flows in and a fourth inlet and outlet port 233b (outlet) through which the fluid flows out to communicate with each other.

According to this configuration, the communication path 233s through which the fluid flows can be formed in the main body part 23 only by cutting out the main body part 23 in a fan shape centered on the axis X, and thus a configuration of the rotary valve 100 can be simplified. Because the cutout portion 233 is cut out in a fan shape centered on the axis X, it is easy to create the cutout portion 233. Furthermore, when the valve part 21 rotates, the channel cross-sectional area through which the fluid can flow increases. Moreover, it is not necessary to separately form, inside the main body part 23, a plurality of channels connecting the fourth inlet and outlet port 233b (outlet) and the third inlet and outlet port 233a (inlet). Thus, the rotary valve 100 has a simplified configuration.

(2) In the rotary valve 100 according to (1), the main body part 23 may have projecting walls 235 and 236 projecting in the circumferential direction DC.

According to this configuration, because the main body part 23 has the projecting walls 235 and 236 projecting in the circumferential direction DC, it is possible to increase an area of a portion where a member provided on an outer periphery of the main body part 23 (for example, the sealing material 4) and the projecting walls 235 and 236 are in contact with each other (hereinafter, referred to as a "contact portion"). As a result, for example, the reaction force due to the contact between the sealing material 4 and the projecting walls 235 and 236 can be dispersed, and deviation of the reaction force from the sealing material 4 due to the provision of the cutout portion 233 can be mitigated. Thus, the sealing property of the rotary valve 100 can be improved.

(3) In the rotary valve 100 according to (2), a surface of the projecting walls 235 and 236, the surface being on a side farther from the top plate part 22, may be tilted so as to be closer the top plate part 22 as being closer to the shaft part 20.

According to this configuration, because the surfaces of the projecting walls 235 and 236, the surfaces being on the side farther from the top plate part 22, are tilted so as to be closer to the top plate part 22 as being closer to the shaft part 20, it is possible to avoid interference between the bearing 3 rotatably supporting an end portion of the shaft part 20, the end portion being on the side opposite to the top plate part 22, and the projecting walls 235 and 236. Thus, height (projection toward the top plate part 22 side) of the valve rotor 2 supported by the bearing 3 is suppressed, and an entire height of the rotary valve 100 (length in the direction along the axis X) can be suppressed.

(4) In the rotary valve 100 according to any one of (1) to (3), top plate holes 221h penetrating along the axis X may be formed in the top plate part 22.

According to this configuration, gas such as air contained in the fluid flowing in from the lower side than the top plate part 22 (the side farther from the top plate part 22) can be removed from the top plate holes 221h. Furthermore, air entrainment in the rotary valve 100 can be prevented, and valve properties can be improved.

(5) **In** the rotary valve 100 according to any one of (1) to (4), the shaft part 20 may be hollow and may have a shaft wall 201 serving as a partition between an internal space 20s and external space of the shaft part 20, and a shaft hole 201h penetrating the shaft wall 201 in a direction orthogonal to the axis X may be formed in the shaft wall 201.

According to this configuration, gas such as air contained in the fluid flowing into the internal space 20s of the shaft part 20 can be removed from the shaft hole 201h. Furthermore, air entrainment in the rotary valve 100 can be prevented, and valve properties can be improved.

(6) **In** the rotary valve 100 according to (1), the main body part 23 may further include a coupling portion 237 that faces the top plate part 22 with the cutout portion 233 interposed between the main body part 23 and the top plate part 22, and may provide coupling in the circumferential direction DC.

According to this configuration, it is possible to increase an area of a portion where a member provided on the outer periphery of the main body part 23 (for example, the sealing material 4) and the coupling portion 237 are in contact with each other. For example, the reaction force due to the contact between the sealing material 4 and the coupling portion 237 can be dispersed, and deviation of the reaction force from the sealing material 4 due to the provision of the cutout portion 233 can be mitigated. Thus, the sealing property of the rotary valve 100 can be improved.

(7) In the rotary valve 100 according to any one of (1) to (6), a first valve channel L1 (through channel) penetrating inside may be formed in the main body part 23.

According to this configuration, because the first valve channel L1 (through channel) penetrating the inside is formed, it is possible to control flow of the fluid flowing through the first valve channel L1 (through channel) and control flow of the fluid flowing through a channel communicated by the cutout portion 233. That is, it is possible to control the flow of the fluid flowing through two channels.

(8) In the rotary valve 100 according to any one of (1) to (7), the third inlet and outlet port 233a (inlet) or the fourth inlet and outlet port 233b (outlet) may communicate with a channel chamber 1S formed in a housing 1 that houses the valve part 21, on a side opposite to the top plate part 22 in a direction along the axis X.

According to this configuration, it is possible to control the flow of the fluid flowing through the channel chamber 1S formed in the housing 1.

### INDUSTRIAL APPLICABILITY

The present disclosure can be utilized for a rotary valve.

### REFERENCE SIGNS LIST

1: Housing, 1S: Channel chamber, 20: Shaft part, 20s: Internal space, 21: Valve part, 22: Top plate part, 23: Main body part, 100: Rotary valve, 201: Shaft wall, 201h: Shaft hole, 221h: Top plate hole, 233: Cutout portion, 233a: Third inlet and outlet port (inlet), 233b: Fourth inlet and outlet port (outlet), 233s: Communication path, 234u: Surface on side farther from top plate part (lower surface), 235: Projecting wall, 236: Projecting wall, 237: Coupling portion, DC: Circumferential direction, DX: Axis direction, DR: Radial direction, L1: Through channel, and X: Axis

## Claims

1. A rotary valve comprising:
a shaft part that rotates about an axis by drive force; and
a valve part rotatable integrally with the shaft part and having a cylindrical shape, wherein
the valve part includes a top plate part extending from the shaft part in a direction orthogonal to the axis, and a main body part extending from the top plate part along the shaft part,
the main body part includes a cutout portion cut out in a fan shape centered on the axis, on a side opposite to the top plate part, and
the cutout portion forms a communication path that allows an inlet through which fluid flows in and an outlet through which the fluid flows out to communicate with each other.

2. The rotary valve according to claim 1, wherein the main body part includes a projecting wall projecting in a circumferential direction.

3. The rotary valve according to claim 2, wherein a surface of the projecting wall, the surface being on a side farther from the top plate part, is tilted so as to be closer the top plate part as being closer to the shaft part.

4. The rotary valve according to claim 1 or 2, wherein a top plate hole penetrating along the axis is formed in the top plate part.

5. The rotary valve according to claim 1 or 2, wherein
the shaft part is hollow and has a shaft wall serving as a partition between an internal space and external space of the shaft part, and
a shaft hole penetrating the shaft wall in a direction orthogonal to the axis is formed in the shaft wall.

6. The rotary valve according to claim 1, wherein the main body part further includes a coupling portion that faces the top plate part with the cutout portion interposed between the main body part and the top plate part, and provides coupling in a circumferential direction.

7. The rotary valve according to claim 1, wherein a through channel penetrating inside is formed in the main body part.

8. The rotary valve according to claim 1, wherein the inlet or the outlet communicates with a channel chamber formed in a housing that houses the valve part, on a side opposite to the top plate part in a direction along the axis.
